# FASCICULE DE BREVET EUROPEEN

(11) **EP 4 327 021 B1**
(45) Date de publication et mention de la délivrance du brevet: **08.07.2026**
(21) Numéro de dépôt: 22722320.3
(22) Date de dépôt: 15.04.2022
(51) Int. Cl.: F23R 3/18, F23R 3/20, F02K 3/10

(54) **DISPOSITIF ACCROCHE-FLAMMES POUR POSTCOMBUSTION DE TURBOREACTEUR COMPRENANT DES BRAS A TROIS BRANCHES**
FLAMMENHALTER FÜR EINE NACHBRENNER-TURBODÜSENVORRICHTUNG MIT DREI VERZWEIGTEN ARMEN
FLAME-HOLDER DEVICE FOR A TURBOJET AFTERBURNER, COMPRISING THREE-BRANCHED ARMS

(30) Priorité: 19.04.2021 FR 2103988
(43) Date de publication de la demande: 28.02.2024
(73) Titulaire: SAFRAN AIRCRAFT ENGINES, 75015 Paris (FR)
(72) Inventeur: BECHET, Clément Jean Henri, 77550 Moissy-Cramayel (FR); GRESLIN, Emmanuel Jean André, 77550 Moissy-Cramayel (FR); MALBOIS, Pierre André Gabriel, 77550 Moissy-Cramayel (FR); PIEUSSERGUES, Christophe, 77550 Moissy-Cramayel (FR)
(74) Mandataire: Santarelli
(86) Numéro de dépôt international: PCT/FR2022/050715
(87) Numéro de publication internationale: WO 2022/223915

(56) Documents cités:
- FR-A1- 2 904 684
- FR-A1- 2 909 438
- JP-A- 2017 180 938
- RU-U1- 205 518
- US-A- 2 800 765
- US-A- 3 210 928

## Description

### DOMAINE TECHNIQUE

La présente invention se rapporte au domaine des turboréacteurs destinés à la propulsion des aéronefs et comprenant un canal de postcombustion. Elle concerne une partie arrière de turboréacteur comprenant un dispositif accroche-flammes et un turboréacteur comprenant une telle partie arrière.

### ÉTAT DE LA TECHNIQUE ANTÉRIEURE

Des turboréacteurs de type connu, notamment ceux destinés au vol supersonique, comprennent dans leur partie arrière, également dénommée arrière-corps, un canal de postcombustion, également dénommé « canal de réchauffe », dans lequel le flux de gaz issu de la turbine peut subir une nouvelle combustion grâce à l'oxygène restant en son sein, avant de se détendre dans une tuyère d'éjection.

Des dispositifs d'injection de carburant en forme de bras sont en général agencés à l'entrée du canal de combustion pour vaporiser du carburant vers l'aval en direction d'un dispositif accroche-flammes destiné à stabiliser la flamme au sein du canal de post-combustion.

Un tel dispositif accroche-flammes comprend typiquement une rangée annulaire de bras accroche-flammes s'étendant radialement, destinés à favoriser une propagation radiale de la flamme le long de chacun des bras, et un anneau accroche-flammes reliant ces derniers deux-à-deux pour favoriser une propagation circonférentielle de la flamme, de bras en bras.

La conception d'un tel dispositif accroche-flammes implique de faire un compromis entre la capacité du dispositif à accrocher et stabiliser au mieux la flamme, et la limitation de la perte de charge induite par l'obstruction du canal de post combustion par le dispositif.

Un tel dispositif accroche-flammes contribue en particulier à la définition du profil de température du flux d'air en entrée de la tuyère d'échappement d'un turboréacteur, c'est-à-dire en sortie du canal de postcombustion. Or, il est souhaitable que ce profil de température soit aussi uniforme que possible afin de maximiser les performances du turboréacteur.

Une partie arrière de turboréacteur comprenant un dispositif accroche-flammes selon l'art antérieur est connue du document FR 2 904 684.

Dans ce contexte, il existe un besoin pour une partie arrière de turboréacteur avec un dispositif accroche-flammes amélioré.

### EXPOSÉ DE L'INVENTION

L'invention proposes à cet effet une partie arrière de turboréacteur, comprenant un canal de postcombustion, un carter de canal de postcombustion entourant ledit canal, et au moins un dispositif accroche-flammes pour postcombustion de turboréacteur, le dispositif accroche-flammes comprenant une rangée annulaire de bras accroche- flammes répartis autour d'un axe du dispositif et comprenant chacun une branche interne présentant une extrémité libre et une autre extrémité, opposée à l'extrémité libre, et deux branches externes qui s'étendent à partir de l'autre extrémité de la branche interne, en divergeant l'une de l'autre dans une direction allant de l'extrémité libre vers l'autre extrémité de la branche interne, de sorte que, pour chacun desdits bras accroche- flammes, la branche interne se prolonge radialement vers l'extérieur en les deux branches externes qui divergent l'une de l'autre radialement vers l'extérieur dans deux directions circonférentielles opposées de telle sorte que les branches externes des bras accroche-flammes constituent des zones de rapprochement mutuel entre bras accroche- flammes consécutifs permettant la propagation d'une flamme de postcombustion de bras en bras, dans laquelle au moins l'une des branches externes de chacun des bras accroche- flammes présente une extrémité radialement externe raccordée au carter de canal de postcombustion ou à une virole de séparation de flux agencée concentriquement à l'intérieur du carter de canal de postcombustion ou à des bras de support s'étendant radialement vers l'intérieur à partir du carter de canal de postcombustion.

La configuration des bras accroche-flammes permet ainsi que ces derniers assurent à la fois la propagation radiale et la propagation circonférentielle de la flamme.

La partie arrière de turboréacteur avec le dispositif accroche-flammes offre ainsi une alternative avantageuse aux parties arrières de turboréacteur avec des dispositifs connus constitués de bras distants les uns des autres reliés par un anneau accroche-flammes. Par rapport à de tels dispositifs connus, le dispositif accroche-flammes de la partie arrière de turboréacteur selon l'invention présente une meilleure répartition dans le plan transversal, ce qui permet de réduire l'obstruction en conservant les mêmes performances que les dispositifs connus en matière d'accrochage et de stabilisation de la flamme, ou d'accroître ces performances tout en conservant une obstruction modérée.

En particulier, l'extension radiale vers l'extérieur des branches externes permet d'étaler la propagation de la flamme dans le plan transversal, alors que la propagation obtenue avec l'anneau accroche-flammes des dispositifs connus tend à être concentrée à proximité d'une ligne circonférentielle donnée.

Dans des modes de réalisation préférés de l'invention, pour au moins l'un des bras accroche-flammes et de préférence pour chacun des bras accroche-flammes, les deux branches externes sont agencées de part et d'autre d'un plan médian de la branche interne.

Dans des modes de réalisation préférés de l'invention, pour au moins l'un des bras accroche-flammes et de préférence pour chacun des bras accroche-flammes, les deux branches externes forment des angles égaux avec le plan médian de la branche interne.

Dans des modes de réalisation préférés de l'invention, pour au moins l'un des bras accroche-flammes et de préférence pour chacun des bras accroche-flammes, la branche interne s'étend selon une direction radiale par rapport à l'axe du dispositif.

Dans des modes de réalisation préférés de l'invention, les deux branches externes de chacun des bras accroche-flammes sont une première branche et une deuxième branche configurées de sorte que, pour chacun des bras accroche-flammes, une face terminale de la première branche est en regard d'une face latérale de la deuxième branche d'un bras accroche-flammes qui précède le bras accroche-flammes considéré dans un sens de rotation déterminé autour de l'axe du dispositif.

Dans des modes de réalisation préférés de l'invention, les deux branches externes de chacun des bras accroche-flammes sont une première branche et une deuxième branche configurées de sorte que, pour chacun des bras accroche-flammes, une face latérale de la première branche est en regard d'une face latérale de la deuxième branche d'un bras accroche-flammes qui précède le bras accroche-flammes considéré dans un sens de rotation déterminé autour de l'axe du dispositif.

Dans des modes de réalisation préférés de l'invention, au moins certains des bras accroche-flammes comprennent un conduit d'air agencé pour faire circuler de l'air radialement vers l'intérieur depuis au moins une entrée d'air jusqu'à au moins une sortie d'air.

Dans des modes de réalisation préférés de l'invention, au moins certains des bras accroche-flammes comprennent un conduit de carburant agencé pour faire circuler du carburant radialement vers l'intérieur depuis au moins une entrée de carburant jusqu'à au moins une sortie de carburant.

L'invention concerne également un turboréacteur pour aéronef comprenant une partie arrière du type décrit ci-dessus.

### BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
- la figure 1 est une demi-vue schématique en section axiale d'un turboréacteur comprenant un canal de postcombustion ;
- la figure 2 est une demi-vue schématique en section axiale d'une partie arrière de turboréacteur, comprenant un dispositif accroche-flammes de type connu ;
- la figure 3 est une vue schématique de face, depuis l'aval, du dispositif accroche-flammes de type connu de la partie arrière de turboréacteur de la figure 2 ;
- la figure 4 est une vue schématique de face, depuis l'aval, d'un dispositif accroche-flammes selon un mode de réalisation préféré de l'invention ;
- la figure 5 est une vue schématique en perspective, depuis l'aval, d'un bras accroche-flammes du dispositif de la figure 4 ;
- la figure 6 est une vue schématique en perspective, depuis l'aval, d'un bras accroche-flammes selon une variante de l'invention.

Dans l'ensemble de ces figures, des références identiques peuvent désigner des éléments identiques ou analogues.

### EXPOSÉ DÉTAILLÉ DE MODES DE RÉALISATION PRÉFÉRÉS

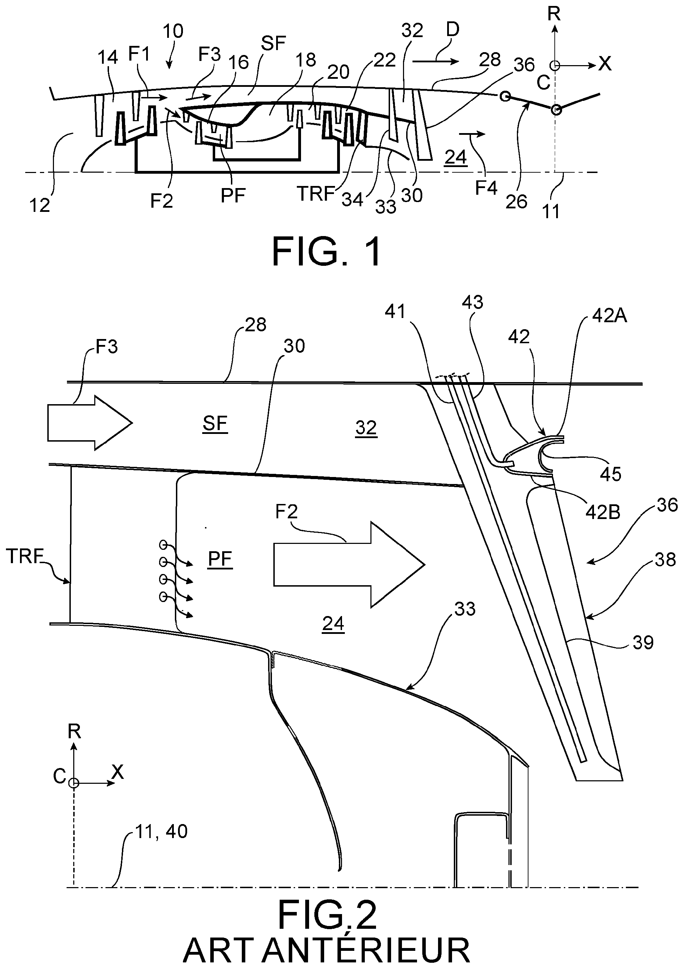

La figure 1 illustre un turboréacteur 10, par exemple à double corps et à double flux, destiné par exemple à la propulsion d'un aéronef apte au vol supersonique, et donc destiné en particulier à être installé dans le fuselage d'un tel aéronef. L'invention est bien entendu applicable à d'autres types de turboréacteurs.

Dans l'ensemble de cette description, la direction axiale X est la direction de l'axe longitudinal 11 du turboréacteur. Sauf lorsqu'il en est stipulé autrement, la direction radiale R est en tout point une direction orthogonale à l'axe longitudinal 11 et passant par ce dernier, et la direction circonférentielle C (parfois dénommée direction azimutale ou ortho-radiale) est en tout point une direction orthogonale à la direction radiale R et à l'axe longitudinal 11. Les qualificatifs « amont » et « aval » sont définis par référence à une direction générale D de l'écoulement des gaz dans le turboréacteur 10.

À titre illustratif, un tel turboréacteur 10 comprend, de l'amont vers l'aval, une entrée d'air 12, un compresseur basse pression 14, un compresseur haute pression 16, une chambre de combustion 18, une turbine haute pression 20, une turbine basse pression 22, un canal de postcombustion 24, et une tuyère 26 à géométrie variable, par exemple de type convergente-divergente. Ces organes du turboréacteur sont tous centrés selon l'axe longitudinal 11 de celui-ci.

Un carter de canal de postcombustion 28 entoure ledit canal.

De plus, une virole de séparation de flux 30, couramment dénommée « confluence », s'étend vers l'aval à partir d'un carter arrière TRF de la turbine basse pression 22, à l'intérieur du carter 28, concentriquement à ce dernier, de manière à délimiter extérieurement l'entrée du canal de postcombustion 24 et à délimiter, avec le carter 28, un canal annulaire 32 formant l'extrémité aval de la veine secondaire SF.

Enfin, un cône de diffusion 33 s'étend vers l'aval dans le prolongement d'un moyeu du carter arrière TRF de la turbine basse pression 22, de manière à délimiter intérieurement l'entrée du canal de postcombustion 24.

De manière bien connue, le compresseur haute pression 16, la chambre de combustion 18, et les turbines haute pression 20 et basse pression 22, définissent une veine primaire PF. Cette dernière est entourée par une veine secondaire SF de la turbomachine qui s'étend de l'amont vers l'aval, à partir d'une sortie du compresseur basse pression 14 jusqu'à une extrémité aval de la virole de séparation de flux 30, et qui inclut donc le canal annulaire 32 précité.

Ainsi, en fonctionnement, de l'air F1 qui est entré par l'entrée d'air 12 et qui a été comprimé par le compresseur basse pression 14, se divise ensuite en un flux primaire F2 qui circule dans la veine primaire PF et en un flux secondaire F3 qui circule dans la veine secondaire SF. Le flux primaire F2 est alors comprimé davantage dans le compresseur haute pression 16, puis mélangé à du carburant et enflammé dans la chambre de combustion 18, avant de subir une détente dans la turbine haute pression 20 puis dans la turbine basse pression 22.

Les gaz de combustion constituant le flux primaire F2 en sortie de la turbine et le flux secondaire F3 se mélangent au sein du canal de postcombustion 24 à partir de l'extrémité aval de la virole de séparation de flux 30, et constituent ainsi un flux de gaz d'échappement F4 qui poursuit sa circulation dans le canal de postcombustion 24 puis s'échappe du turboréacteur 10 au travers de la sortie délimitée par la tuyère 26.

En régime de fonctionnement avec postcombustion, par exemple pour propulser un aéronef à des vitesses supersoniques, du carburant est injecté dans le flux de gaz au sein du canal de postcombustion 24, et le mélange ainsi constitué est enflammé au sein de ce canal afin de générer un surcroît de poussée.

À cet effet, des dispositifs d'injection de carburant 34 en forme générale de bras sont agencés à l'entrée du canal de postcombustion 24 pour vaporiser du carburant vers l'aval en direction d'un dispositif accroche-flammes 36 destiné à favoriser la stabilisation des flammes.

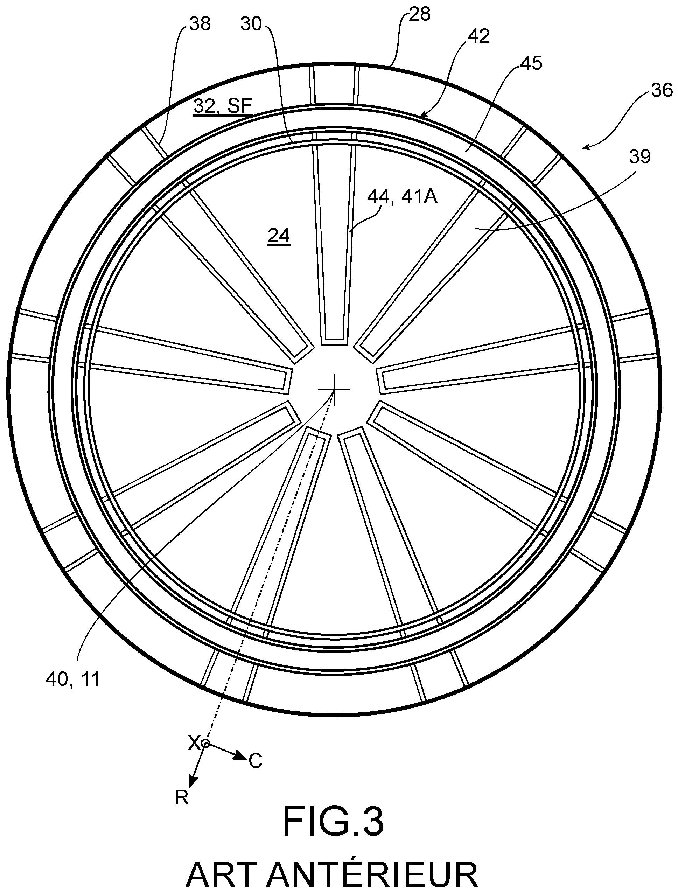

La figure 2 illustre à plus grande échelle la partie arrière d'un tel turboréacteur, dans une configuration connue. Cette figure montre en particulier le dispositif accroche-flammes 36, qui est visible également de face sur la figure 3, et qui comprend une rangée annulaire de bras accroche-flammes 38 s'étendant radialement par rapport à un axe 40 du dispositif, qui se confond avec l'axe longitudinal 11 du turboréacteur, et un anneau accroche-flammes 42 centré sur l'axe 11 et reliant deux-à-deux les bras accroche-flammes 38.

Les bras accroche-flammes 38, par exemple au nombre de neuf, sont destinés à favoriser une propagation radiale de la flamme le long de chacun des bras, tandis que l'anneau accroche-flammes 42 est destiné à favoriser une propagation circonférentielle de la flamme, de bras en bras.

Les bras accroche-flammes 38 sont chacun raccordés au carter de canal de postcombustion 28, à partir duquel ces bras s'étendent radialement vers l'intérieur.

Dans l'exemple illustré sur la figure 2, l'anneau accroche-flammes 42 est agencé à l'extrémité aval du canal annulaire 32 formant l'extrémité aval de la veine secondaire SF. Dans d'autres configurations connues, l'anneau accroche-flammes 42 est agencé à l'intérieur de la virole de séparation de flux 30, dans le prolongement de la veine primaire PF.

Les bras accroche-flammes 38 comprennent en général des moyens pour faire circuler en leur sein de l'air relativement frais, issu de la veine secondaire SF, afin d'assurer la protection thermique des bras accroche-flammes. Pour chacun des bras, de tels moyens comprennent en général une ou plusieurs entrées d'air (non visibles sur les figures) débouchant vers l'amont dans la veine secondaire SF, des sorties d'air 44 (figure 3) débouchant vers l'aval dans le canal de postcombustion 24, et un conduit interne raccordant les entrées d'air aux sorties d'air. Ces bras comprennent par exemple chacun un dispositif de protection thermique 39 (figures 2 et 3) apte à canaliser l'air frais issu de la veine secondaire, et délimitant les sorties d'air 44 (figure 3). Dans certains cas, tels que l'exemple illustré, les bras accroche-flammes 38 comprennent en outre des moyens d'injection de carburant 41 (figure 2) comprenant, pour chaque bras, une ou plusieurs sorties de carburant 41A (figure 3). Les sorties d'air et de carburant peuvent être confondues, le mélange d'air et de carburant pouvant être opéré au sein des bras accroche-flammes 38.

En référence à la figure 2, l'anneau accroche-flammes 42 présente une section concave en direction de l'aval, globalement en C ou en V, définissant ainsi deux branches 42A, 42B raccordées l'une à l'autre du côté amont, et présentant à l'aval des extrémités libres qui favorisent, en fonctionnement, l'apparition de zones de recirculation du flux de gaz, contribuant à la stabilisation de la flamme. L'anneau accroche-flammes 42 comporte en général également des moyens pour faire circuler en son sein de l'air frais issu de la veine secondaire SF, et dans certains cas, tels que l'exemple illustré, des moyens d'injection de carburant 43. L'anneau accroche-flammes 42 comporte typiquement un écran de protection thermique 45 agencé entre les branches 42A et 42B pour canaliser l'air frais issu de la veine secondaire et protéger ainsi l'anneau 42 du côté aval vis-à-vis des gaz chauds environnants et du rayonnement thermique de la flamme.

Le document FR2909438 divulgue un exemple d'un tel dispositif accroche-flammes.

Avec un tel dispositif accroche-flammes, les inventeurs ont en particulier déterminé que l'anneau accroche-flammes se traduit par une obstruction dont la localisation n'est pas optimale, et que l'éloignement moyen entre les bras est défavorable à l'auto-entretien de la flamme.

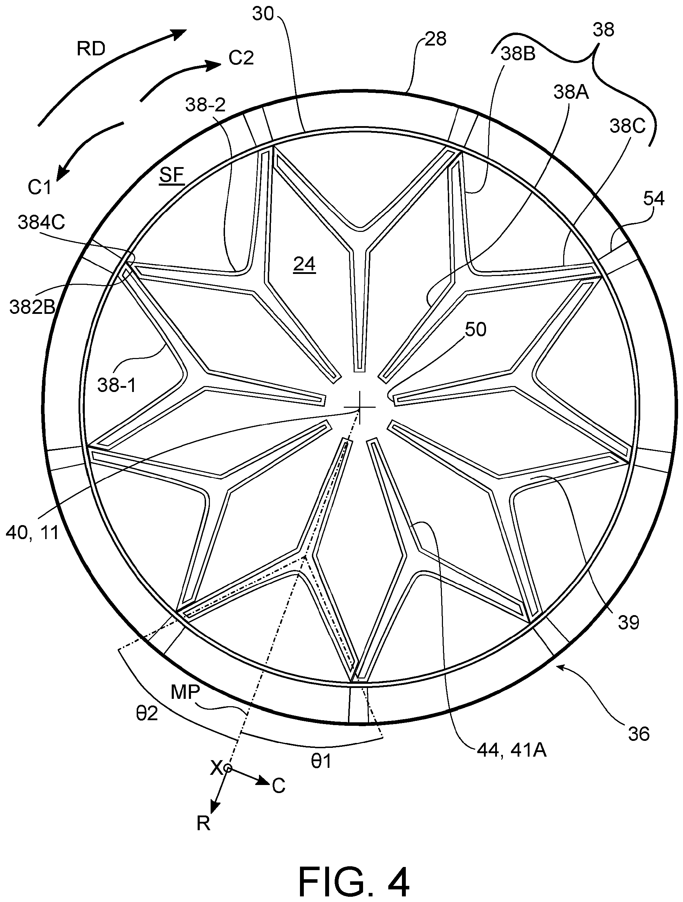

Afin de remédier à ce problème, un dispositif accroche-flammes 36 de la partie arrière de turboréacteur selon l'invention comprend, en référence à la figure 4, des bras accroche-flammes 38 comprenant chacun une branche interne 38A présentant une extrémité libre 50 et une autre extrémité 52, opposée à l'extrémité libre 50, et deux branches externes 38B et 38C qui s'étendent à partir de l'autre extrémité 52 de la branche interne 38A, en divergeant l'une de l'autre dans une direction allant de l'extrémité libre 50 vers l'autre extrémité 52 de la branche interne. Au sein du dispositif accroche-flammes 36, une telle direction correspond à la direction radiale R pour chacun des bras accroche-flammes 38.

Il faut ainsi comprendre que les bras 38 ont chacun une forme générale en Y lorsque le dispositif est vu en section transversale ou de face.

Les bras accroche-flammes 38 sont répartis autour de l'axe 40 du dispositif de sorte que, pour chacun des bras accroche-flammes, la branche interne 38A se prolonge radialement vers l'extérieur en les deux branches externes 38B et 38C et de sorte que ces deux branches externes 38B et 38C divergent l'une de l'autre radialement vers l'extérieur dans deux directions circonférentielles opposées C1 et C2.

La configuration des bras accroche-flammes 38 permet que ces derniers assurent à la fois la propagation radiale et la propagation circonférentielle de la flamme. La configuration des branches externes 38B et 38C permet en effet que ces dernières constituent des zones de rapprochement mutuel entre bras 38 consécutifs permettant la propagation de la flamme de bras en bras. À cet effet, les extrémités radialement externes des branches externes 38B et 38C constituent des zones de proximité maximale entre bras consécutifs.

Le dispositif 36 constitué des bras accroche-flammes 38 offre ainsi une alternative avantageuse aux dispositifs connus constitués de bras radiaux et d'un anneau accroche-flammes. Par rapport à ces derniers, le dispositif accroche-flammes 36 de la partie arrière de turboréacteur selon l'invention présente une meilleure répartition dans le plan transversal, ce qui permet de réduire l'obstruction en conservant les mêmes performances que les dispositifs connus en matière d'accrochage et de stabilisation de la flamme, ou d'accroître ces performances en conservant une obstruction constante.

En particulier, l'extension radiale vers l'extérieur des branches externes 38B et 38C permet d'étaler la propagation de la flamme dans le plan transversal, alors que la propagation obtenue avec l'anneau accroche-flammes des dispositifs connus tend à être concentrée à proximité d'une ligne circonférentielle donnée.

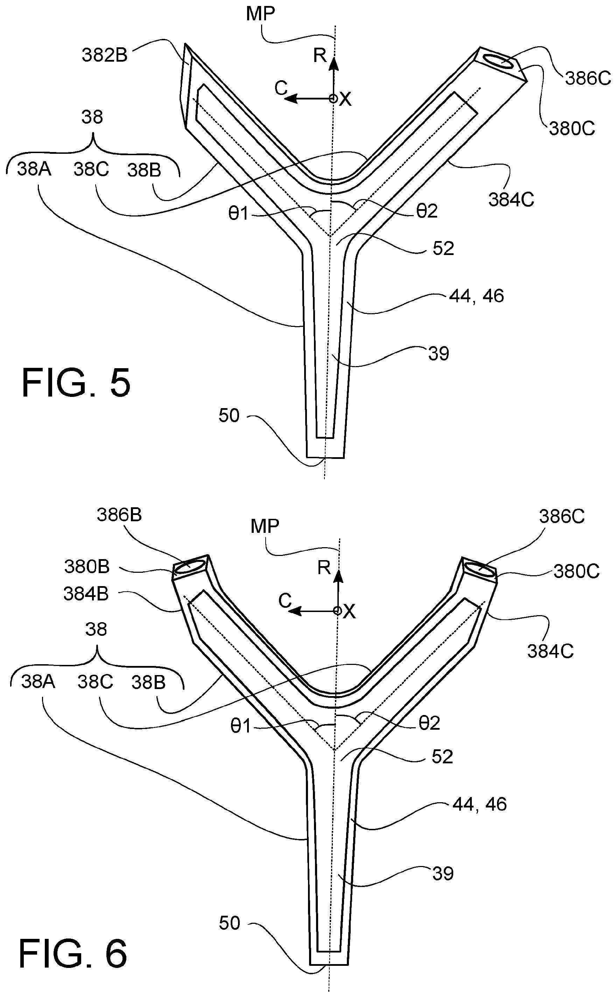

D'une manière générale, comme cela apparaît plus clairement sur les figures 5 et 6, les deux branches externes 38B et 38C sont avantageusement agencées de part et d'autre d'un plan médian MP de la branche interne 38A, et forment par exemple avec ledit plan médian MP des angles θ1, θ2 égaux. De plus, la branche interne 38A s'étend avantageusement selon la direction radiale R.

La forme générale des bras 38 selon l'invention telle que définie ci-dessus n'exclut toutefois pas que les angles θ1 et θ2 soient différents, ni que la branche interne 38A s'étende dans une direction inclinée par rapport à la direction radiale R, ou encore que l'une des branches externes 38B ou 38C s'étende dans l'alignement de la branche interne 38A.

Comme cela apparaîtra plus clairement dans ce qui suit, au moins l'une des branches externes 38B, 38C de chacun des bras accroche-flammes présente une extrémité radialement externe 380C raccordée à un bras de support 54 correspondant s'étendant radialement vers l'intérieur à partir du carter de canal de postcombustion 28. Le raccordement entre ladite extrémité radialement externe 380C et le bras de support 54 correspondant s'effectue par exemple au travers d'un orifice correspondant prévu dans la virole de séparation de flux 30.

En variante, ladite extrémité radialement externe 380C peut être raccordée à la virole de séparation de flux 30 ou être raccordée directement au carter de canal de postcombustion 28, par exemple dans les cas où le dispositif accroche-flammes 36 est agencé en aval d'une telle virole de séparation de flux 30.

En référence constante à la figure 4, et en référence à la figure 5 qui illustre l'un des bras 38 du dispositif 36 de la figure 4, les deux branches externes de chacun des bras accroche-flammes sont une première branche 38B et une deuxième branche 38C, qui sont configurées de sorte que, pour chacun des bras accroche-flammes (par exemple le bras 38-2 de la figure 4), une face terminale 382B de la première branche s'étende en regard d'une face latérale 384C de la deuxième branche d'un bras accroche-flammes (par exemple le bras 38-1) qui précède le bras accroche-flammes considéré dans un sens de rotation RD déterminé autour de l'axe 40 du dispositif. Plus précisément, la face terminale 382B de la première branche s'étend soit au contact de la face latérale 384C de la deuxième branche du bras qui précède, soit à faible distance de celle-ci, de manière à ménager entre ces faces 382B, 384C un jeu autorisant des dilatations thermiques des bras en fonctionnement.

La face terminale 382B de la première branche est donc libre de se déplacer par rapport à la face latérale 384C de la deuxième branche du bras qui précède.

Dans un tel cas, seule la deuxième branche 38C participe à la fixation du bras 38 au carter de canal de postcombustion 28 (de manière directe ou indirecte) ou, le cas échéant, à la virole de séparation de flux 30.

L'ensemble des bras 38 est ainsi isostatique.

À l'instar des bras 38 du dispositif de la figure 3 de type connu, certains ou tous les bras accroche-flammes 38 du dispositif de la partie arrière de turboréacteur selon l'invention comprennent avantageusement des moyens pour faire circuler en leur sein de l'air frais issu de la veine secondaire SF.

En référence à la figure 5, ces moyens comprennent une entrée d'air 386C débouchant au travers de l'extrémité radialement externe 380C de la deuxième branche 38C, pour recevoir de l'air prélevé dans la veine secondaire SF par le bras support 54 correspondant. Ce dernier comporte par exemple à cet effet un ou plusieurs orifices ouverts vers l'amont et un conduit interne agencé pour conduire l'air issu du ou des orifices vers une sortie radialement interne raccordée à l'entrée d'air 386C du bras accroche-flammes 38 correspondant.

Lesdits moyens comprennent en outre des sorties d'air 44 réparties le long des branches 38A-38C du bras (ou, en variante, le long d'une ou deux des branches) et débouchant vers l'aval dans le canal de postcombustion 24, et un conduit interne d'air (non visible sur les figures) ménagé le long des branches concernées de manière à raccorder l'entrée d'air 386C aux sorties d'air 44. Dans l'exemple illustré, le conduit interne se prolonge donc dans la branche interne 38A et dans la première branche 38B.

De plus, certains ou tous les bras accroche-flammes 38 du dispositif de la partie arrière de turboréacteur selon l'invention comprennent avantageusement des moyens d'injection de carburant, comprenant un conduit interne de carburant (non visible sur les figures) se terminant par une ou plusieurs sorties de carburant 46 débouchant vers l'aval dans le canal de postcombustion 24. Les sorties d'air et de carburant peuvent là encore être confondues, le mélange d'air et de carburant pouvant être opéré au sein des bras accroche-flammes 38.

Les bras 38 pourvus de moyens d'injection de carburant sont de préférence également pourvus de moyens de circulation d'air frais tels que décrits ci-dessus de sorte que ces derniers protègent thermiquement le conduit interne de carburant, à la fois vis-à-vis du flux de gaz chauds environnant et vis-à-vis du rayonnement des flammes.

La figure 6 illustre une variante de réalisation dans laquelle les deux branches externes de chacun des bras accroche-flammes 38 sont une première branche 38B et une deuxième branche 38C configurées de sorte que, pour chacun des bras accroche-flammes, une face latérale 384B de la première branche 38B s'étend en regard d'une face latérale 384C de la deuxième branche 38C d'un bras accroche-flammes qui précède le bras accroche-flammes considéré dans le sens de rotation déterminé RD. Plus précisément, la face latérale 384B de la première branche s'étend soit au contact de la face latérale 384C de la deuxième branche du bras qui précède, soit à faible distance de celle-ci.

Dans un tel cas, les deux branches externes 38B et 38C peuvent participer chacune à la fixation du bras 38 au carter de canal de postcombustion 28, de manière directe, ou de manière indirecte par l'intermédiaire de bras supports tels que les bras supports 54 décrits ci-dessus, ou encore, le cas échéant, à la virole de séparation de flux 30.

De plus, des entrées d'air 386B et 386C peuvent être ménagées respectivement dans les extrémités radialement externes 380B, 380C pour fournir de l'air frais aux sorties d'air 44.

Dans le mode de réalisation illustré, les bras 38 sont régulièrement répartis autour de l'axe 40 du dispositif. En variante, en fonction de la configuration de la partie arrière du turboréacteur, il est possible qu'un ou plusieurs des bras 38 ait une forme différente de celle des autres bras et/ou que les espacements entre bras 38 consécutifs ne soient pas tous égaux, sans sortir du cadre de l'invention.

## Revendications

1. Partie arrière de turboréacteur, comprenant un canal de postcombustion (24), un carter de canal de postcombustion (28) entourant ledit canal, et au moins un dispositif accroche-flammes (36) pour postcombustion de turboréacteur, le dispositif accroche-flammes (36) comprenant une rangée annulaire de bras accroche-flammes (38) répartis autour d'un axe (40) du dispositif et comprenant chacun une branche interne (38A) présentant une extrémité libre (50) et une autre extrémité (52), opposée à l'extrémité libre, et deux branches externes (38B, 38C) qui s'étendent à partir de l'autre extrémité (52) de la branche interne (38A), en divergeant l'une de l'autre dans une direction allant de l'extrémité libre (50) vers l'autre extrémité (52) de la branche interne (38A), de sorte que, pour chacun desdits bras accroche-flammes, la branche interne (38A) se prolonge radialement vers l'extérieur en les deux branches externes (38B, 38C) qui divergent l'une de l'autre radialement vers l'extérieur dans deux directions circonférentielles (C1, C2) opposées de telle sorte que les branches externes des bras accroche-flammes (38) constituent des zones de rapprochement mutuel entre bras accroche-flammes (38) consécutifs par lesquelles une flamme de postcombustion peut se propager de bras en bras, **caractérise en ce qu'**au moins l'une des branches externes (38C) de chacun des bras accroche-flammes présente une extrémité radialement externe raccordée au carter de canal de postcombustion (28) ou à une virole de séparation de flux (30) agencée concentriquement à l'intérieur du carter de canal de postcombustion (28) ou à des bras de support (54) s'étendant radialement vers l'intérieur à partir du carter de canal de postcombustion (28).

2. Partie arrière de turboréacteur selon la revendication 1, dans laquelle, pour au moins l'un des bras accroche-flammes (38), les deux branches externes (38B, 38C) sont agencées de part et d'autre d'un plan médian (MP) de la branche interne (38A).

3. Partie arrière de turboréacteur selon la revendication 2, dans laquelle, pour au moins l'un des bras accroche-flammes (38), les deux branches externes (38B, 38C) forment des angles (θ1, θ2) égaux avec le plan médian (MP) de la branche interne (38A).

4. Partie arrière de turboréacteur selon l'une quelconque des revendications 1 à 3, dans laquelle, pour au moins l'un des bras accroche-flammes, la branche interne (38A) s'étend selon une direction radiale (R) par rapport à l'axe (40) du dispositif.

5. Partie arrière de turboréacteur selon l'une quelconque des revendications 1 à 4, dans laquelle les deux branches externes de chacun des bras accroche-flammes (38) sont une première branche (38B) et une deuxième branche (38C) configurées de sorte que, pour chacun des bras accroche-flammes, une face terminale (382B) de la première branche (38B) est en regard d'une face latérale (384C) de la deuxième branche (38C) d'un bras accroche-flammes qui précède le bras accroche-flammes considéré dans un sens de rotation (RD) déterminé autour de l'axe (40) du dispositif.

6. Partie arrière de turboréacteur selon l'une quelconque des revendications 1 à 4, dans laquelle les deux branches externes de chacun des bras accroche-flammes (38) sont une première branche (38B) et une deuxième branche (38C) configurées de sorte que, pour chacun des bras accroche-flammes, une face latérale (384B) de la première branche (38B) est en regard d'une face latérale (384C) de la deuxième branche (38C) d'un bras accroche-flammes qui précède le bras accroche-flammes considéré dans un sens de rotation (RD) déterminé autour de l'axe (40) du dispositif.

7. Partie arrière de turboréacteur selon l'une quelconque des revendications 1 à 6, dans laquelle au moins certains des bras accroche-flammes (38) comprennent au moins l'un parmi :
- un conduit d'air agencé pour faire circuler de l'air radialement vers l'intérieur depuis au moins une entrée d'air (386B, 386C) jusqu'à au moins une sortie d'air (44) ; et
- un conduit de carburant agencé pour faire circuler du carburant radialement vers l'intérieur depuis au moins une entrée de carburant jusqu'à au moins une sortie de carburant (41A).

8. Turboréacteur pour aéronef, comprenant une partie arrière selon l'une quelconque des revendications 1 à 7.

## Patentansprüche

1. Heckteil eines Turbo-Strahltriebwerks, umfassend einen Nachverbrennungskanal (24), ein Nachverbrennungskanalgehäuse (28), das den Kanal umgibt, und mindestens eine Flammenhaltervorrichtung (36) für die Nachverbrennung des Turbo-Strahltriebwerks, wobei die Flammenhaltervorrichtung (36) eine ringförmige Reihe von Flammenhalterarmen (38) umfasst, die um eine Achse (40) der Vorrichtung verteilt sind und jeweils einen inneren Zweig (38A) umfassen, der ein freies Ende (50) und ein anderes Ende (52) aufweist, das dem freien Ende gegenübersteht, und zwei äußere Schenkel (38B, 38C), die sich von dem anderen Ende (52) des inneren Schenkels (38A) aus erstrecken, wobei sie sich in einer Richtung von dem freien Ende (50) zu dem anderen Ende (52) des inneren Schenkels (38A) voneinander abweichen, so dass sich der innere Schenkel (38A) für jeden der Flammenhalterarme radial nach außen in die beiden äußeren Schenkel (38B, 38C) erstreckt die in zwei entgegengesetzten Umfangsrichtungen (C1, C2) radial nach außen voneinander abweichen, so dass die äußeren Äste der Flammenhalterarme (38) Bereiche der gegenseitigen Annäherung aufeinanderfolgender Flammenhalterarme (38) bilden, durch die sich eine Nachbrennflamme von Arm zu Arm ausbreiten kann,
**dadurch gekennzeichnet, dass** mindestens einer der äußeren Schenkel (38C) jedes der Flammenhalterarme ein radial äußeres Ende aufweist, das mit dem Nachverbrennungskanalgehäuse (28) oder mit einer konzentrisch in dem Nachverbrennungskanalgehäuse (28) angeordneten Strömungstrennhülse (30) oder mit Stützarmen (54) verbunden ist, die sich radial nach innen von dem Nachverbrennungskanalgehäuse (28) erstrecken.

2. Heckteil eines Turbo-Strahltriebwerks nach Anspruch 1, wobei für mindestens einen der Flammenhalterarme (38) die beiden äußeren Schenkel (38B, 38C) auf beiden Seiten einer Mittelebene (MP) des inneren Schenkels (38A) angeordnet sind.

3. Heckteil eines Turbo-Strahltriebwerks nach Anspruch 2, wobei für mindestens einen der Flammenhalterarme (38) die beiden äußeren Schenkel (38B, 38C) Winkel (θ1, θ2) bilden, die mit der Mittelebene (MP) des inneren Schenkels (38A) gleich sind.

4. Heckteil eines Turbo-Strahltriebwerks nach einem der Ansprüche 1 bis 3, wobei sich für mindestens einen der Flammenhalterarme der innere Schenkel (38A) in einer radialen Richtung (R) in Bezug auf die Achse (40) der Vorrichtung erstreckt.

5. Heckteil eines Turbo-Strahltriebwerks nach einem der Ansprüche 1 bis 4, wobei die beiden äußeren Schenkel jedes der Flammenhalterarme (38) ein erster Schenkel (38B) und ein zweiter Schenkel (38C) sind, die so konfiguriert sind, dass für jeden der Flammenhalterarme eine Endfläche (382B) des ersten Schenkels (38B) einer Seitenfläche (384C) des zweiten Schenkels (38C) eines Flammenhalterarms gegenüberliegt, der dem betrachteten Flammenhalterarm in einer bestimmten Drehrichtung (RD) um die Achse (40) der Vorrichtung vorausgeht.

6. Heckteil eines Turbo-Strahltriebwerks nach einem der Ansprüche 1 bis 4, wobei die beiden äußeren Schenkel jedes der Flammenhalterarme (38) ein erster Schenkel (38B) und ein zweiter Schenkel (38C) sind, die so konfiguriert sind, dass für jeden der Flammenhalterarme eine Seitenfläche (384B) des ersten Schenkels (38B) einer Seitenfläche (384C) des zweiten Schenkels (38C) eines Flammenhalterarms gegenüberliegt, der dem betrachteten Flammenhalterarm in einer bestimmten Drehrichtung (RD) um die Achse (40) der Vorrichtung vorausgeht.

7. Heckteil eines Turbo-Strahltriebwerks nach einem der Ansprüche 1 bis 6, wobei mindestens einige der Flammenhalterarme (38) mindestens eines von Folgendem umfassen:
- eine Luftleitung, die so angeordnet ist, dass sie Luft radial nach innen von mindestens einem Lufteinlass (386B, 386C) zu mindestens einem Luftauslass (44) zirkuliert; und
- eine Kraftstoffleitung, die so angeordnet ist, dass sie Kraftstoff radial nach innen von mindestens einem Kraftstoffeinlass zu mindestens einem Kraftstoffauslass (41A) zirkuliert.

8. Turbo-Strahltriebwerk für ein Flugzeug, umfassend ein Heckteil nach einem der Ansprüche 1 bis 7.

## Claims

1. Rear turbojet-engine part, comprising an afterburner channel (24), an afterburner-channel housing (28) surrounding said channel, and at least one flame-holder device (36) for turbojet-engine afterburning, the flame-holder device (36) comprising an annular row of flame-holder arms (38) distributed around an axis (40) of the device and each comprising an inner branch (38A) having a free end (50) and another end (52) opposite to the free end, and two outer branches (38B, 38C) that extend from the other end (52) of the inner branch (38A), diverging from each other in a direction extending from the free end (50) to the other end (52) of the inner branch (38A), so that, for each of said flame-holder arms, the inner branch (38A) transitions radially outwards into the two outer branches (38B, 38C), which diverge from each other radially outwards in two opposite circumferential directions (C1, C2) so that the outer branches of the flame-holder arms (38) constitute mutually approaching areas between consecutive flame-holder arms (38) by means of which an afterburner flame can propagate from arm to arm,
in which at least one of the outer branches (38C) of each of the flame-holder arms has a radially outer end connected to the afterburner-channel housing (28) or to a flow-separation shroud (30) arranged concentrically inside the afterburner-channel housing (28) or to support arms (54) extending radially inwards from the afterburner-channel housing (28).

2. Rear turbojet-engine part according to claim 1, wherein, for at least one of the flame-holder arms (38), the two outer branches (38B, 38C) are arranged on either side of a midplane (MP) of the inner branch (38A).

3. Rear turbojet-engine part according to claim 2, wherein, for at least one of the flame-holder arms (38), the two outer branches (38B, 38C) form equal angles (θ1, θ2) with the midplane (MP) of the inner branch (38A).

4. Rear turbojet-engine part according to any one of claims 1 to 3, wherein, for at least one of the flame-holder arms, the inner branch (38A) extends in a radial direction (R) with respect to the axis (40) of the device.

5. Rear turbojet-engine part according to any one of claims 1 to 4, wherein the two outer branches of each of the flame-holder arms (38) are a first branch (38B) and a second branch (38C) configured so that, for each of the flame-holder arms, an end face (382B) of the first branch (38B) faces a lateral face (384C) of the second branch (38C) of a flame-holder arm that precedes the flame-holder arm in question in a given direction of rotation (RD) about the axis (40) of the device.

6. Rear turbojet-engine part according to any one of claims 1 to 4, wherein the two outer branches of each of the flame-holder arms (38) are a first branch (38B) and a second branch (38C) configured so that, for each of the flame-holder arms, a lateral face (384B) of the first branch (38B) faces a lateral face (384C) of the second branch (38C) of a flame-holder arm that precedes the flame-holder arm in question in a given direction of rotation (RD) about the axis (40) of the device.

7. Rear turbojet-engine part according to any one of claims 1 to 6, wherein at least some of the flame-holder arms (38) comprise at least one from:
- an air conduit arranged to circulate air radially inwards from at least one air inlet (386B, 386C) to at least one air outlet (44); and
- a fuel pipe arranged to circulate fuel radially inwards from at least one fuel inlet to at least one fuel outlet (41A).

8. Turbojet engine for an aircraft, comprising a rear part according to any one of claims 1 to 7.
